# EUROPÄISCHE PATENTSCHRIFT

(11) **EP 4 495 470 B1**
(45) Veröffentlichungstag und Bekanntmachung des Hinweises auf die Patenterteilung: **26.11.2025**
(21) Anmeldenummer: 23186393.7
(22) Anmeldetag: 19.07.2023
(51) Int. Cl.: F16L 3/133

(54) **EINE BOLZENMUTTER SOWIE EIN HERSTELLUNGSVERFAHREN DAFÜR**
A BOLT NUT AND A METHOD OF MANUFACTURING THE SAME
ECROU DE BOULON ET SON PROCEDE DE FABRICATION

(43) Veröffentlichungstag der Anmeldung: 22.01.2025
(73) Patentinhaber: Böllhoff Verbindungstechnik GmbH, 33649 Bielefeld (DE)
(72) Erfinder: DRAHT, Torsten, 33758 Schloß Holte-Stukenbrock (DE); KETZER, Frederic, 33397 Rietberg (DE)
(74) Vertreter: HWP Intellectual Property

(56) Entgegenhaltungen:
- DE-A1- 3 327 751
- DE-U1- 9 103 295
- US-A- 4 307 986

## Beschreibung

### 1. Gebiet der Erfindung

Die vorliegende Erfindung betrifft eine Bolzenmutter zur Befestigung einer Unterdeckenkonstruktion. Des Weiteren betrifft vorliegende Erfindung ein Herstellungsverfahren der Bolzenmutter, einen dabei verbauten Einsteckeinsatz sowie ein Setzverfahren des Einsteckeinsatzes in einem Rohr.

### 2. Hintergrund der Erfindung

Im Stand der Technik sind Unterdeckenkonstruktionen bekannt, die zur Ausstattung von Gebäuden genutzt werden. Zu derartigen Unterdeckenkonstruktionen zählen beispielsweise Belüftungssysteme oder allgemeine Kanäle, um Luftmassen oder andere Medien im Gebäude zu bewegen. Derartige Kanäle werden unter anderem mit Gewindestangen und Spannschlössern und ähnlichem befestigt, mit denen eine Höheneinstellung der zu befestigenden Kanäle möglich ist.

Bekannte Konstruktionen haben den Nachteil, dass nur mit großem Material und Zeitaufwand eine Änderung, beispielsweise in der Neigung eines Kanalsystems, realisiert werden kann.

Eine Zusammenfassung verschiedener oben genannter Systeme liefert die europäische Patentanmeldung EP 1 616 121 A1.

Zur Befestigung von Kanalabschnitten werden Gewinderohre verwendet, wie sie beispielgebend in JP 071 193 37 A beschrieben sind. Diese bestehen aus einem Hohlrohr, an dessen offenen Enden jeweils ein Innengewinde mithilfe eines Gewindeeinsatzes angeordnet ist.

Eine ähnliche Konstruktion beschreibt US 4,081,219. Dieses Dokument beschreibt ein Hohlrohr mit einem Innengewinde, sodass an beiden Rohrenden hohlzylindrische Elemente eingeschraubt werden können. Das eine hohlzylindrische Element bildet beispielsweise ein Innengewinde, da es an seiner radialen Innenseite ein weiteres Gewinde bereitstellt. Das andere eingeschraubte hohlzylindrische Element bildet eine Buchse, sodass eine Gewindestange mit einem Auflagestück sich an dieser Stelle von innen abstützen kann. Derartige Konstruktionen sind aufwändig sowohl in der Herstellung ihrer Einzelteile als auch in ihrer Zusammensetzung. Zudem erfordern sie eine Abstimmung der Gewinde untereinander sowie einen hohen Installationsaufwand, um eine passende Höheneinstellung für eine Unterdeckenkonstruktion erreichen zu können.

Um in einem Hohlrohr ein Innengewinde bereitstellen zu können, wurden bereits vor Jahren Einsteckeinsätze unterschiedlichster Bauart entwickelt. Beispielsweise beschreibt EP 1 873 406 A1 einen derartigen Einsatz, der im gesetzten Zustand aus zwei teleskopartig ineinandergreifenden konischen Hülsenabschnitten besteht. Diese Hülsenabschnitte sind fest miteinander verbunden, wobei sich diese Verbindung auf Grundlage einer vorhandenen Sollbruchstelle beim Setzen lösen lässt. Während die eine Hülse, im speziellen die innere Hülse ein Innengewinde bereitstellt, sorgt die jeweils konische Außenkontur beider Hülsen für ein reibschlüssiges Festpressen des Einsteckeinsatzes, beispielsweise in einem Metallrohr. Durch die doppelt konische Konstruktion der teleskopartig ineinandergreifenden Hülsen besteht die Gefahr der Verformung der Gewindehülse. Dies beeinflusst negativ die Lauffähigkeit der Gewindeverbindung.

DE 26 30 344 sowie DE 33 27 751 beschreiben jeweils einen Einsteckeinsatz, der aus einer über eine Sollbruchstelle verbundene konische Gewindehülse und einer sich daran anschließenden hohlzylindrischen Befestigungshülse zusammensetzt. Die teleskopartige Verbindung beider Hülsen hat den Nachteil, dass an dem direkten Kontakt beider Hülsen eine integrale Verbindung mit Sollbruchstelle vorgesehen ist. Durch die direkte Verbindung besteht der Nachteil, dass die vorgesehene Sollbruchstelle die Verbindung beider Hülsen beim Setzen nicht sauber löst. Auf diese Weise werden die Hülsen in ihrem Übergangsbereich beschädigt oder Materialreste aus der Hülsenverbindung in den Zwischenraum beider Hülsen geschleppt. Derartige Materialreste führen zur Verformung der ineinandergreifenden Hülsen oder blockieren das teleskopartige Aufeinanderschieben beider Hülsen. Auf diese Weise läuft der Setzvorgang eines derartigen Einsatzes nicht reibungslos ab, sodass die Gewindehülse ungenau in dem Rohrende gesetzt ist.

Es ist daher die Aufgabe vorliegender Erfindung, eine in Ergänzung zum Stand der Technik zusätzliche Befestigungsmöglichkeit für eine Unterdeckenkonstruktion vorzuschlagen. Im Zuge dessen sollen ebenfalls alternative Gewindelösungen beschrieben werden, die in einer derartigen Befestigungsalternative genutzt werden können.

DE 91 03 295 U1 beschreibt eine Aufhängevorrichtung für eine Rohrschelle.

### 3. Zusammenfassung der Erfindung

Die obige Aufgabe wird durch eine Bolzenmutter zu Befestigung einer Unterdeckenkonstruktion gemäß dem unabhängigen Patentanspruch 1 gelöst. Des Weiteren löst obige Aufgabe ein Herstellungsverfahren für eine derartige Bolzenmutter gemäß dem unabhängigen Patentanspruch 10. Vorteilhafte Ausgestaltungen und Weiterentwicklungen gehen aus der folgenden Beschreibung, den begleitenden Zeichnungen sowie den anhängenden Patentansprüchen hervor.

Eine Bolzenmutter zur Befestigung einer Unterdeckenkonstruktion, die die folgenden Merkmale aufweist: ein Rohr mit einem ersten offenen Rohrende und einem zweiten offenen Rohrende sowie einem die Rohrenden verbindenden Durchgangskanal, ein Mutterngewinde, das an einer radialen Innenseite benachbart zum ersten Rohrende angeordnet ist, einen Verbindungsbolzen, vorzugsweise ein Gewindebolzen, mit einem Schaft und einem Kopf, der angrenzend an das zweite Rohrende formschlüssig und drehbar in dem Durchgangskanal gehalten ist, und ein Reibungsmittel, welches in angepasster Zusammenwirkung mit einer Relativdrehung des Verbindungsbolzens ein Reibmoment erzeugt, welches der Drehung des Verbindungsbolzens entgegenwirkt.

Die erfindungsgemäße Bolzenmutter stellt im Hinblick auf bekannte Befestigungsmittel eine effektive und alternative Befestigungsmöglichkeit dar. Vorzugsweise ist diese Bolzenmutter abgestimmt, um beispielsweise Rohrschellen in einer Unterdeckenkonstruktionen zu befestigen. Dazu wird der Verbindungsbolzen an der Rohrschelle befestigt. Der Verbindungsbolzen hat dazu vorzugsweise die Konfiguration eines Gewindebolzens, der in ein Aufnahmegewinde der Rohrschelle eingeschraubt werden kann. In gleicher Weise ist es ebenfalls bevorzugt, den Verbindungsbolzen an seinem Schaft mit einem Bajonettverschluss oder einer Rastverbindung oder einer ähnlichen Alternative zur Herstellung einer reibschlüssigen und/oder kraftschlüssigen Verbindung zur Rohrschelle oder einer ähnlichen Konstruktion herzustellen. Gemäß einer bevorzugten Ausführungsform vorliegender Erfindung ist der Verbindungsbolzen als Gewindebolzen mit einem Standardgewinde auf seinem Schaft ausgestattet.

Mindestens ein erfindungsgemäßes Reibungsmittel ist dazu vorgesehen und angepasst, um eine Drehung des Verbindungsbolzens um seine Längsachse zu erschweren. Dazu wird vorzugsweise eine auftretende Reibung zwischen Kopfunterseite und einer Angriffsfläche des Rohrs gesteigert. Gemäß unterschiedlichen bevorzugten Ausgestaltungen dient dazu bevorzugt ein Ring aus elastischem Material. Dieser ist zwischen Kopfunterseite und Rohrinnerem angeordnet und steigert die Reibung bei Drehung des Verbindungsbolzens (siehe unten).

Ebenfalls bevorzugt ist eine Feder im Durchgangskanal positioniert, die den Verbindungsbolzen in Richtung Verbindungsschaft drückt. Diese zusätzlich Kraftwirkung steigert ebenfalls die Reibung zwischen der Kopfunterseite und einer daran angreifenden Oberfläche.

Weitere bevorzugte und optionale Reibungsmittel sind unten näher erläutert.

Während der Verbindungsbolzen formschlüssig und drehbar im Inneren der Bolzenmutter gehalten ist, weist das dem Verbindungsbolzen gegenüberliegende Ende des Rohrs ein inneres Mutterngewinde auf. In dieses Mutterngewinde ist zur weiteren Befestigung der Bolzenmutter beispielsweise eine Gewindestange oder ein Bolzen einschraubbar. Da vorzugsweise das Mutterngewinde benachbart zum Eingang in den Durchgangskanal des Rohrs angeordnet ist, bildet der Durchgangskanal einen sich an das Mutterngewinde anschließenden Aufnahmeraum für eine Gewindestange oder dergleichen. Auf diese Weise stellt die Kombination aus Mutterngewinde und sich daran anschließendem Durchgangskanal eine flexible Ausgleichsmöglichkeit bei der Nutzung der Bolzenmutter zur Verfügung. Denn beispielsweise zur Einstellung der Höhe einer an einer Deckenkonstruktion befestigten Rohrschelle lässt sich eine Gewindestange unterschiedlich weit in den Durchgangskanal einschrauben.

Neben dieser Funktion als Aufnahmevolumen für eine Gewindestange oder dergleichen dient der Durchgangskanal ebenfalls als Durchgriffsmöglichkeit auf den Verbindungsbolzen. Zu diesem Zweck weist der Kopf des Verbindungsbolzens ein Antriebsmerkmal auf, in welches man mit einem Werkzeug durch das Mutterngewinde und durch den Durchgangskanal hindurch eingreifen kann.

Gemäß einer bevorzugten Ausführungsform vorliegender Erfindung ist das Mutterngewinde durch eine am ersten Rohrende befestigte Blindnietmutter oder einen Einsteckeinsatz mit Mutterngewinde bereitgestellt.

Um das an dem ersten Rohrende angeordnete Mutterngewinde bereitzustellen, sind unterschiedliche konstruktive Alternativen bevorzugt. Die einfachste Alternative besteht darin, das Mutterngewinde direkt in die radiale Innenwand des Rohrs einzuarbeiten. Um aber eine größere Flexibilität in der Einstellung der Größe und Art des Mutterngewindes sicherstellen zu können, wird gemäß weiterer bevorzugter Ausführungsformen vorliegender Erfindung eine Blindnietmutter oder ein Einsteckeinsatz mit Mutterngewinde in dem oder angrenzend an die erste Rohröffnung befestigt. Eine Blindnietmutter oder ein derartiger Einsteckeinsatz haben den Vorteil, dass in Abhängigkeit von der praktischen Situation und unabhängig von dem Innendurchmesser des Rohrs ein passendes Innengewinde im Durchgangskanal des Rohrs mit Hilfe der Blindnietmutter oder des Einsteckeinsatzes realisiert werden kann.

Weiter bevorzugt ergibt sich aus der Nutzung von Blindnietmutter oder Einsteckeinsatz, dass ein freier Innendurchmesser des Aufnahmeraums des Rohrs größer ist als ein Nenndurchmesser des Mutterngewindes von Einsteckeinsatz oder Blindnietmutter. Dadurch wird ein Einschraubmoment beim Einschrauben bspw. einer Gewindestange in das Mutterngewinde unabhängig von der Einschraubtiefe der Gewindestange konstant bleiben, da die einzuschraubende Gewindestange nicht durch ein Reibmoment an einer inneren Rohrwand oder durch einen sich verlängernden Gewindeeingriff abgebremst wird.

Gemäß unterschiedlicher bevorzugter Ausführungsformen vorliegender Erfindung wird beim Setzen der Blindnietmutter oder beim Setzen des Einsteckeinsatzes am ersten Rohrende die Rohrwand verformt. Die Verformung führt dazu, dass die Blindnietmutter oder der Einsteckeinsatz reibschlüssig und auch formschlüssig angrenzend bzw. benachbart zum ersten Rohrende in dem Rohr der Bolzenmutter gehalten wird.

Ebenfalls bevorzugt weist das auf diese Weise in die Bolzenmutter eingebrachte Mutterngewinde die gleiche Gangrichtung auf wie ein Gewinde eines am zweiten Rohrende angeordneten Gewindebolzens.

Vorzugsweise weist das Rohr benachbart zu dem zweiten Rohrende eine Verengung des Durchgangskanals auf, sodass ein Innendurchmesser der Verengung kleiner ist als ein Außendurchmesser des Kopfes, um den Verbindungsbolzen formschlüssig im Durchgangskanal zu halten.

Der bevorzugte Verbindungsbolzen oder auch der bevorzugte Gewindebolzen wird auf unterschiedliche Art und Weise benachbart zum zweiten Rohrende befestigt. Da sich der Kopf des Verbindungsbolzens radial über den Außendurchmesser des Schafts des Verbindungsbolzens hinaus erstreckt, ist eine formschlüssige Verbindung am zweiten Rohrende ausreichend, um den Verbindungsbolzen um seine Längsachse drehbar innerhalb des Durchgangskanals zu halten. Trotz dieser formschlüssigen Befestigung ragt der Schaft des Verbindungsbolzens durch die zweite Rohröffnung aus dem Rohr der Bolzenmutter hinaus, um eine entsprechende Verbindung herstellen zu können.

Gemäß einer bevorzugten Ausgestaltung vorliegender Erfindung ist benachbart zum zweiten Rohrende eine Verengung des Durchgangskanals vorgesehen, an der der Kopf des Verbindungsbolzens formschlüssig an einem Verlassen des Durchgangskanals gehindert wird.

Vorzugsweise wird die Verengung durch einen Buchseneinsatz oder einen Einsteckeinsatz ohne Mutterngewinde oder durch eine Verpressung des Rohrs bereitgestellt.

Um den Verbindungsbolzen über seinen Kopf formschlüssig im Inneren des Durchgangskanals halten zu können, sind verschiedene konstruktive Alternativen zur Realisierung bevorzugt. Die eine Alternative besteht darin, das Rohr der Bolzenmutter durch ein Verpressen soweit in seinem Innendurchmesser zu verkleinern, dass der Kopf des Verbindungsbolzens im Durchgangskanal drehbar gehalten wird. Alternativ dazu bietet sich an, einen Buchseneinsatz benachbart zum zweiten Rohrende innerhalb des Durchgangskanals zu setzen. Ein derartiger Buchseneinsatz stellt vorzugsweise eine hohlzylindrische Verjüngung des Inneren des Durchgangskanals dar, an welcher sich die Unterseite des Kopfes des Verbindungsbolzens abstützen kann.

Eine weitere bevorzugte Ausführungsform vorliegender Erfindung sieht vor, einen unten näher erläuterten Einsteckeinsatz in das zweite Rohrende der Bolzenmutter zu setzen. Ein derartiger Einsteckeinsatz besteht bevorzugt aus der Kombination eines hohlzylindrischen und eines konischen Abschnitts, die in einem Setzvorgang teleskopartig ineinander geschoben werden. Die damit verbundene Aufweitung des Rohrendes führt zu einer reibschlüssigen und formschlüssigen Befestigung des Einsteckeinsatzes in dem Rohr der Bolzenmutter. Da ein derart gesetzter Einsteckeinsatz ebenfalls den Innendurchmesser des Rohrs der Bolzenmutter verringert, stützt sich der Kopf des Verbindungsbolzens formschlüssig daran ab und wird im Inneren des Durchgangskanals gehalten.

Der erfindungsgemäße Vorteil des Einsteckeinsatzes besteht in der Flexibilität der Einstellung des durchgängigen Innendurchmessers am zweiten Rohrende der Bolzenmutter. Denn in Abhängigkeit von der Dimension des gewählten Verbindungsbolzens lässt sich darauf abgestimmt die Dimension des Einsteckeinsatzes wählen, sodass neben der Lauffähigkeit auch ein verlässlicher Halt des Verbindungsbolzens in der Bolzenmutter bevorzugt gewährleistet sind. Des Weiteren eröffnet die Nutzung des Einsteckeinsatzes die bevorzugte Flexibilität, eine Länge des Rohrs der Bolzenmutter, beispielsweise auf einer Baustelle, durch einen Werker anzupassen. Nachfolgend wird dann ebenfalls vor Ort bevorzugt der Einsteckeinsatz durch ein passendes Handgerät und unter gleichzeitiger Anordnung des Verbindungsbolzens im Inneren des Durchgangskanals gesetzt, sodass eine an die bauliche Situation anpassbare Bolzenmutter bereitstellbar ist.

Vorzugsweise ist der Einsteckeinsatz kraft- und formschlüssig mit dem Rohr verbunden.

Gemäß einer bevorzugten Ausführungsform der Bolzenmutter ist als ein Reibungsmittel eine erste Feder vorgesehen, die im Durchgangskanal zwischen dem Kopf des Verbindungsbolzens und dem Mutterngewinde benachbart zum ersten Rohrende angeordnet ist, um den Verbindungsbolzen in Richtung des zweiten Rohrendes axial vorzuspannen.

Ebenfalls bevorzugt ist zwischen dem Kopf des Verbindungsbolzens und dem zweiten Rohrende ein Ring aus elastischem Material als ein weiteres Reibungsmittel angeordnet, um bei Relativdrehung eine Reibung zwischen Kopf und Buchseneinsatz oder Einsteckeinsatz oder Verpressung zu erhöhen. Relativdrehung bedeutet in diesem Zusammenhang, dass entweder der Verbindungsbolzen, insbesondere der Gewindebolzen, innerhalb des Rohres gedreht wird oder dass das Rohr mit Buchseieinsatz oder Einsteckeinsatz oder dgl. gedreht wird, während er Gewindebolzen in Ruhe ist.

Basierend auf der in der Bolzenmutter angeordneten Feder wird der Verbindungsbolzen bevorzugt mit der Unterseite seines Kopfes gegen die Verengung oder den Buchseneinsatz oder den Einsteckeinsatz am zweiten Rohrende gedrückt. Dieser reibschlüssige Kontakt bildet die Grundlage dafür, dass der Verbindungsbolzen, vorzugsweise ein Gewindebolzen, allein durch Drehen des Rohrs der Bolzenmutter in ein Aufnahmegewinde eingeschraubt werden kann. Somit ist es nicht in jedem Fall erforderlich, ein Werkzeug durch das erste Rohrende mit dem Antriebsmittel des Kopfes des Gewindebolzens zu verbinden, um diesen zu drehen.

Um diesen reibschlüssigen Kontakt bevorzugt zu erhöhen, ist ein Ring aus elastischem Material zwischen dem Kopf und der Verengung, vorzugsweise dem Buchseneinsatz oder dem Einsteckeinsatz angeordnet. Damit wird der Verbindungsbolzen bevorzugt beim Drehen des Rohrs der Bolzenmutter mitgedreht, sodass der Aufwand zur Nutzung eines Werkzeugs und damit insgesamt der Installationsaufwand für die Bolzenmutter reduziert werden kann.

Eine weitere bevorzugte Ausgestaltung vorliegender Erfindung sieht vor, dass zwischen dem Kopf des Verbindungsbolzens und dem zweiten Rohrende eine zweite Feder angeordnet ist, um eine Reibung zwischen Kopf und dem Rohr zu erhöhen.

Gemäß einer weiteren bevorzugten Ausgestaltung vorliegender Erfindung ist zwischen der Unterseite des Kopfes des Verbindungsbolzens, im Speziellen des bevorzugten Gewindebolzens, und der Verengung benachbart zum zweiten Rohrende eine zweite Feder angeordnet. In ähnlicher Weise wie der oben beschriebene elastische Ring zwischen Kopfunterseite und Verengung erzeugt auch die zweite Feder eine gesteigerte Reibung zwischen dem Gewindebolzen und dem Rohr der Bolzenmutter. Zudem eröffnet die bevorzugte zweite Feder die Möglichkeit, dass auch bei einer in ihrer Form weniger kontrollierten inneren Oberfläche am zweiten Rohrende im Vergleich zu einem Buchseneinsatz oder einem Einsteckeinsatz eine Steigerung der Reibung zwischen Gewindebolzen und Rohr gewährleistet werden kann.

Gemäß einer weiteren bevorzugten Ausgestaltung vorliegender Erfindung weisen das Mutterngewinde und ein Gewinde eines Gewindebolzens als Verbindungsbolzen einen gleichen Drehsinn auf.

Diese bevorzugte konstruktive Ausgestaltung hat beispielsweise einen Vorteil, wenn der Gewindebolzen der Bolzenmutter über Kopf in einer Deckenkonstruktion befestigt wird. Die sich daran anschließende Verschraubung bspw. einer Gewindestange im Mutterngewinde, welches mit dem gleichen Drehsinn wie der Gewindebolzen ausgestattet ist, würde zum Festdrehen oder Einschrauben der Gewindestange die gleiche Drehrichtung nutzen wie der Gewindebolzen. Somit könnte eine Installation bspw. der Gewindestange nicht in eine Lockerung des Gewindebolzens resultieren, sondern würde diesen vielmehr zusätzlich fest drehen.

Vorliegende Erfindung offenbart und umfasst zudem ein Herstellungsverfahren einer Bolzenmutter, insbesondere einer Bolzenmutter gemäß einer der oben beschriebenen Ausgestaltungen, das die folgenden Schritte aufweist: Bereitstellen eines zylindrischen Rohrs mit einem ersten und einem zweiten offenen Rohrende und einem die Rohrenden verbindenden Durchgangskanal, Verengen des zweiten Rohrendes durch Verpressen des zweiten Rohrendes oder Einsetzen eines Einsteckeinsatzes ohne Mutterngewinde oder eines Buchseneinsatzes, Einführen eines Verbindungsbolzens mit einem Kopf und einem Schaft derart in den Durchgangskanal, dass der Schaft am zweiten Rohrende aus dem Durchgangskanal heraus ragt, und Anordnen eines Reibungsmittels im Durchgangskanal, welches in angepasster Zusammenwirkung mit einer Relativdrehung des Verbindungsbolzens in Bezug auf das Rohr ein Reibmoment erzeugt, welches der Drehung des Verbindungsbolzens entgegenwirkt.

Gemäß einer weiteren bevorzugten Verfahrensgestaltung ist als weiterer Schritt vorgesehen: Anordnen einer Feder im Durchgangskanal zum axialen Vorspannen des Verbindungsbolzens und vorzugsweise danach Einpressen eines Einsteckeinsatzes mit Mutterngewinde in das erste Rohrende zum Halten der Feder.

Zur bevorzugten weiteren Steigerung einer Reibung zwischen dm Kopf des Verbindungsbolzens, insbesondere ein Gewindebolzen, ist vorgesehen: Anordnen eines Rings aus elastischem Material als ein Reibungsmittel zwischen dem Kopf des Verbindungsbolzens und dem zweiten Rohrende oder allgemein dem Rohr der Bolzenmutter.

Vorliegende Beschreibung offenbart beispielhaft einen Einsteckeinsatz, der angepasst ist, um auf Grundlage einer eigenen radial aufweitenden Verformung in ein dieses dabei radial aufweitendes Rohrende form- und kraftschlüssig eingeformt zu werden, und der die folgenden Merkmale aufweist: eine hohlzylindrische radiale Ausgleichshülse und eine konische Gewindehülse mit einer konischen Außenkontur und einem radial innerhalb der konischen Außenkontur angeordneten Mutterngewinde oder eine konische Hülse mit einer konischen Außenkontur und einem radial innerhalb der konischen Außenkontur angeordneten zylindrischen Durchgangskanal, die an einem verjüngten axialen Ende in einem gewindelosen hohlzylindrischen Verbindungsschaft ausläuft, der reibschlüssig haltend in die hohlzylindrische Ausgleichshülse eingreift oder der an einem der Ausgleichshülse zugewandten axialen Ende über eine Sollbruchstelle integral mit der Ausgleichshülse verbunden ist.

Zudem ist beispielhaft ein Einsteckeinsatz offenbart, der zumindest zur Herstellung der inneren Konstruktion eines Rohrendes der Bolzenmutter eingesetzt wird. Der Einsteckeinsatz ist aufgrund seiner bevorzugten Konstruktionsalternativen als ein Mutterngewinde, also als ein Gewindeeinsatz, oder als ein Buchseneinsatz ohne Mutterngewinde in einem Rohr setzbar. Aufgrund seiner konstruktiven Ausgestaltung basiert die Befestigung und somit die Nutzung des Einsteckeinsatzes darauf, dass das aufnehmende Rohr aus einem verformbaren Material, wie beispielsweise Metall, hergestellt ist. Denn aufgrund des Einpressens der teleskopartig ineinander rutschenden konischen Hülse und der hohlzylindrischen Hülse wird das Rohr bei der Aufnahme des Einsteckeinsatzes radial auswärts verformt und der Einsteckeinsatz wird in einer verpressten Konfiguration innerhalb des Rohrs gehalten. Auf diese Weise bildet sich eine bevorzugte kraftschlüssige, also reibschlüssige, und eine formschlüssige Verbindung zwischen dem gesetzten Einsteckeinsatz innerhalb des Rohrs und dem Rohr aus.

Unabhängig von der inneren Gestaltung des Einsteckeinsatzes, also mit oder ohne Mutterngewinde, setzt sich generell der Einsteckeinsatz aus einem konischen Abschnitt mit hohlzylindrischem Verbindungsschaft und einem hohlzylindrischen Abschnitt zusammen. Während des Setzvorgangs des Einsteckeinsatzes wird der konische Abschnitt in den hohlzylindrischen Abschnitt eingepresst. Dabei sorgt vorzugsweise der hohlzylindrische Verbindungsschaft am Ende des konischen Abschnitts für ein kontrolliertes Einlaufen des konischen Abschnitts in den hohlzylindrischen Abschnitt des Einsteckeinsatzes. Ausgehend von diesem kontrollierten Einlauf des konischen Abschnitts in den hohlzylindrischen Abschnitt wird der teleskopartige Verpressverbund kontinuierlich aufgebaut und vorzugsweise in seinem kraftschlüssigen Zusammenhalt im Hinblick auf die wirkende Radialkraft zwischen den beiden Abschnitten gesteigert.

Im Hinblick auf die konstruktive Alternative eines einteilig ausgebildeten Einsteckeinsatzes mit Sollbruchstelle stellt der hohlzylindrische Verbindungsschaft trotz Aufbrechens der Sollbruchstelle während des Setzvorgangs sicher, dass der Materialabriss zwischen den beiden Abschnitten kontrolliert erfolgt. Zudem sorgt der hohlzylindrische Verbindungsschaft dafür, dass ein eventuell störender Materialabriss während des Setzvorgangs nur vernachlässigbar geringe Auswirkungen auf die Konfiguration des gesetzten Einsteckeinsatzes hat.

Gemäß einer Ausgestaltung weist dessen Verbindungsschaft einen Außendurchmesser auf, der kleiner oder gleich einem Innendurchmesser der Ausgleichshülse ist. Auf diese Weise wird geometrisch sichergestellt, dass die konische Gewindehülse oder Hülse kontrolliert teleskopartig in die hohlzylindrische Ausgleichshülse gepresst werden kann.

Ebenfalls denkbar umfasst der Verbindungsschaft eine axiale Erstreckung im Bereich von 5 % bis 30 %, vorzugsweise 5 % bis 15 %, einer axialen Gesamtlänge des Einsteckeinsatzes aufweist. Gemäß unterschiedlichen bevorzugten Ausgestaltungen des Einsteckeinsatzes weist der hohlzylindrische Verbindungsschaft am Übergang zwischen der konischen Hülse und der hohlzylindrischen Hülse einen Außendurchmesser auf, der an den Innendurchmesser der Ausgleichshülse, also der hohlzylindrischen Hülse, angepasst ist. Auf Grundlage dieser Konfiguration wird bevorzugt gewährleistet, dass der konische Abschnitt und der hohlzylindrische Abschnitt des Einsteckeinsatzes blockadenfrei während des Setzvorgangs ineinanderlaufen. Zudem wird dadurch bevorzugt vermieden, dass sich die beiden teleskopartig ineinandergreifenden Abschnitte des Einsteckeinsatzes während des Setzvorgangs verkanten.

Gemäß einer weiteren Ausgestaltung ist der Verbindungsschaft in seiner axialen Länge derart konfiguriert, dass er das teleskopartige Ineinanderlaufen des konischen Abschnitts und des hohlzylindrischen Abschnitts des Einsteckeinsatzes gewährleistet. Zu diesem Zweck weist der hohlzylindrische Verbindungsschaft die oben genannte bevorzugte Länge auf, die sich an der axialen Gesamtlänge des Einsteckeinsatzes orientiert.

Gemäß einer anderen Ausgestaltung weist die konische Gewindehülse und/oder die konische Hülse ohne Innengewinde ein Kegelverhältnis K im Bereich von 1:12≤K≤1:4, vorzugsweise 1:10≤K≤1:6, auf.

Um einerseits das teleskopartige Ineinandergreifen der konischen Hülse und der hohlzylindrischen Hülse zu unterstützen und gleichzeitig einen belastbaren Verbund und eine belastbare Befestigung des Einsteckeinsatzes innerhalb eines Rohrs zu gewährleisten, weist die konische Gewindehülse ein bevorzugtes Kegelverhältnis K auf.

Vorliegend ist zudem ein zylindrisches Rohr mit einem ersten offenen Rohrende und einem zweiten offenen Rohrende beschrieben, in welches zumindest an einem der Rohrenden ein Einsteckeinsatz gemäß mindestens einer der oben beschriebenen Ausgestaltungen gesetzt ist.

Beispielgebend ist des Weiteren ein Setzverfahren eines Einsteckeinsatzes gemäß mindestens einer der oben beschriebenen Ausgestaltungen beschrieben, das die folgenden Schritte aufweist: Einsetzen des Einsteckeinsatzes in ein Rohr, sodass die hohlzylindrische Ausgleichshülse angrenzend an ein erstes Rohrende angeordnet ist, Einschrauben einer Zugspindel in das Mutterngewinde der konischen Hülse, Versetzen des ersten Rohrendes in Anlage zu einem Gegenlager, axiales Versetzen der Zugspindel und des Gegenlagers relativ zueinander, sodass die konische Gewindehülse in die Ausgleichshülse versetzt wird, und Ausschrauben der Zugspindel aus dem Mutterngewinde.

Außerdem geht aus der Beschreibung ein Setzverfahren eines Einsteckeinsatzes gemäß mindestens einer der oben beschriebenen Ausgestaltungen hervor, das die folgenden Schritte aufweist Einsetzen des Einsteckeinsatzes mit einem darin angeordneten Verbindungsbolzen in ein Rohr, wobei der Kopf des Verbindungsbolzens im Verbindungskanal angeordnet ist und der Schaft aus dem Einsteckeinsatz heraus ragt, Einschrauben des Schafts des Verbindungsbolzens in eine Gewinde-Zughülse, Versetzen des ersten Rohrendes in Anlage zu einem Gegenlager, axiales Versetzen der Gewinde-Zughülse und des Gegenlagers relativ zueinander, sodass die konische Gewindehülse in die Ausgleichshülse versetzt wird, und Ausschrauben des Schafts aus der Gewinde-Zughülse.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine schematische Seitenansicht einer Bolzenmutter, die ein Rohr mithilfe einer Rohrschelle in einer Unterdeckenkonstruktion befestigt,
- Figur 2: eine axiale Schnittdarstellung einer bevorzugten Ausführungsform einer Bolzenmutter,
- Figur 3: eine vergrößerte Darstellung eines Rohrendes der Bolzenmutter im Schnitt mit einer Blindnietmutter,
- Figur 4: eine vergrößerte Darstellung eines bevorzugten Rohrendes der Bolzenmutter in einer Schnittdarstellung mit einer Blindnietmutter,
- Figur 5: bevorzugte radiale Schnittdarstellungen des Rohrs der Bolzenmutter mit unterschiedlichen Umfangsprofilen des Rohrs der Bolzenmutter,
- Figur 6 a: eine bevorzugte Ausführungsform eines axialen Endes der Bolzenmutter, in dem der Verbindungsbolzen in dem Rohr gehalten ist,

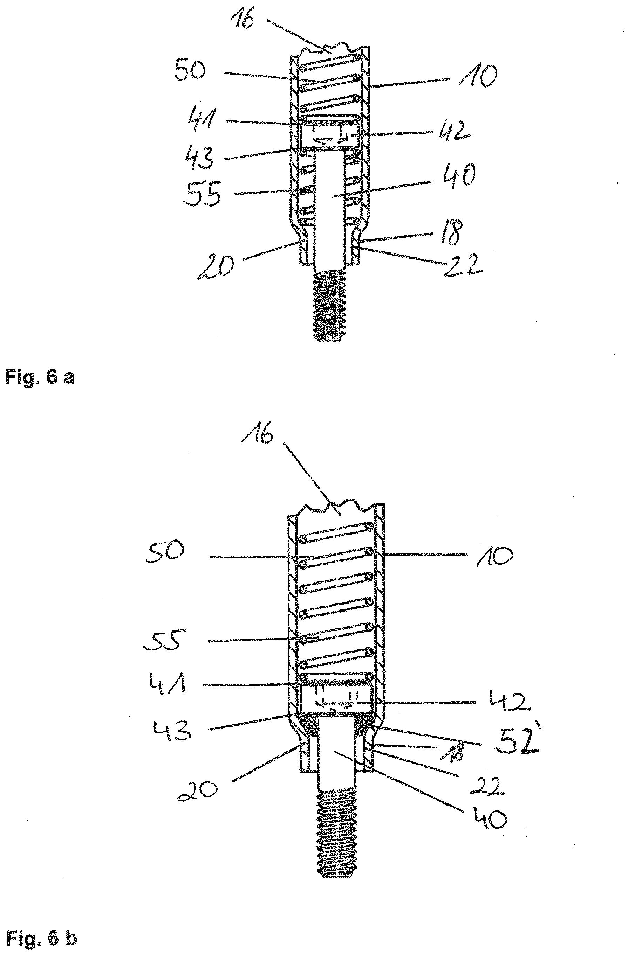

- Figur 6 b: eine bevorzugte Ausführungsform eines axialen Endes der Bolzenmutter mit einer Verpressung und einem kegelstumpfartigen Ring, in dem der Verbindungsbolzen in dem Rohr gehalten ist,

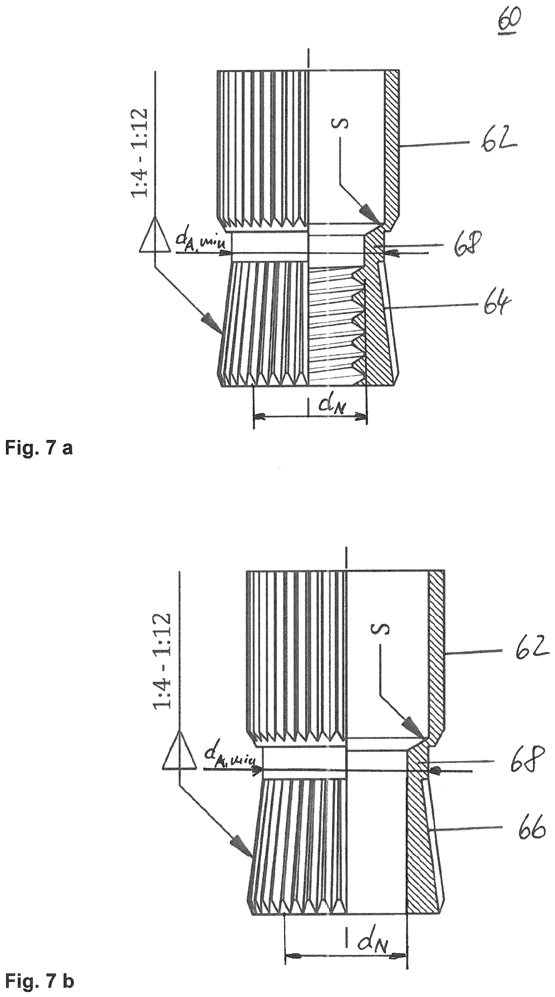

- Figur 7a: eine vergrößerte teilweise Schnittansicht eines beispielhaften einteiligen Einsteckeinsatzes mit konischer Gewindehülse und Sollbruchstelle,
- Figur 7b: eine vergrößerte teilweise Schnittansicht eines beispielhaften einteiligen Einsteckeinsatzes mit konischer Hülse und Sollbruchstelle,

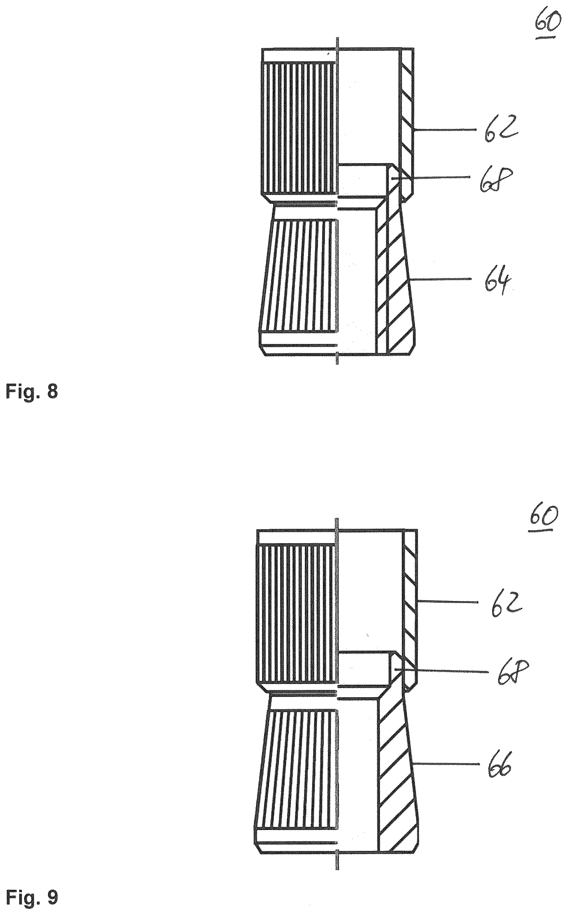

- Figur 8: eine vergrößerte Darstellung einer weiteren bevorzugten Ausgestaltung des beispielhaften Einsteckeinsatzes in einer teilweisen Schnittansicht,
- Figur 9: eine vergrößerte Darstellung einer weiteren beispielhaften Ausgestaltung des Einsteckeinsatzes in einer teilweisen Schnittansicht,

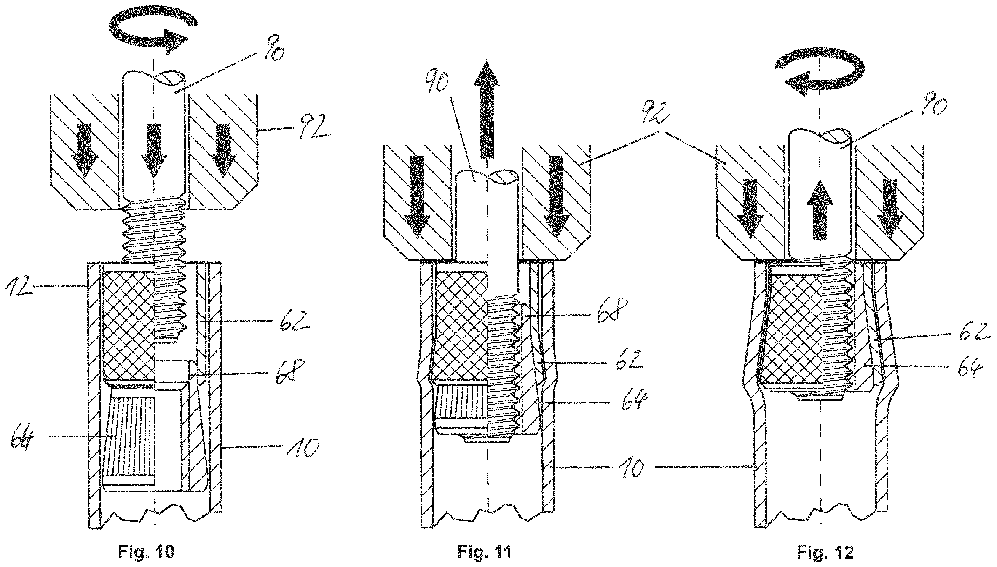

- Figuren 10-12: eine schematische Darstellung der drei aufeinanderfolgenden Phasen des Setzverfahrens des Einsteckeinsatzes mit Innengewinde in einem Rohrende,

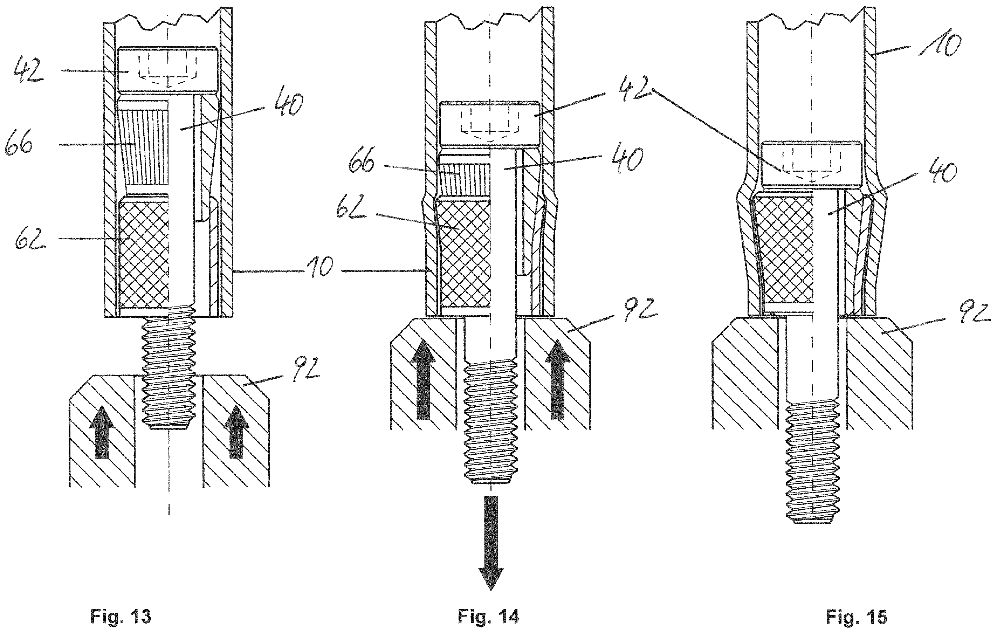

- Figur 13-15: eine Darstellung der drei Phasen eines Setzverfahrens des Einsteckeinsatzes ohne Mutterngewinde in dem Ende eines Rohres mithilfe eines darin angeordneten Verbindungsbolzens,

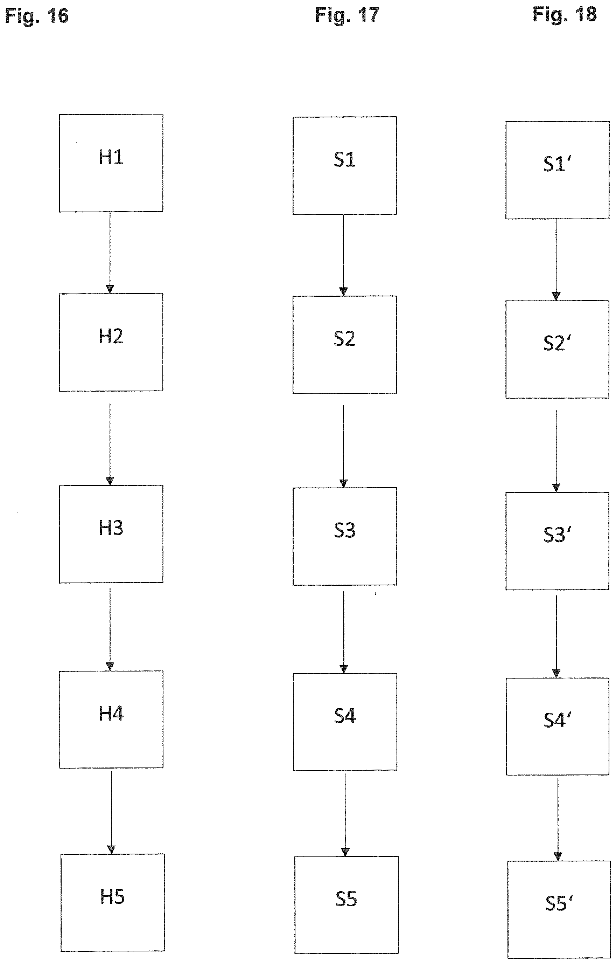

- Figur 16: ein Flussdiagramm einer bevorzugten Ausführungsform des Herstellungsverfahrens der Bolzenmutter,
- Figur 17: ein Flussdiagramm einer Ausgestaltung des Setzverfahrens des beispielhaften Einsteckeinsatzes mit Innengewinde und
- Figur 18: ein Flussdiagramm einer Ausgestaltung des Setzverfahrens des beispielhaften Einsteckeinsatzes ohne Mutterngewinde.

### 5. Detaillierte Beschreibung der bevorzugten Ausführungsformen

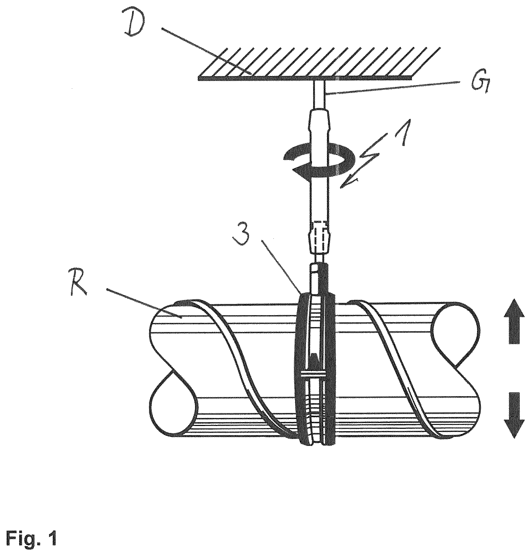

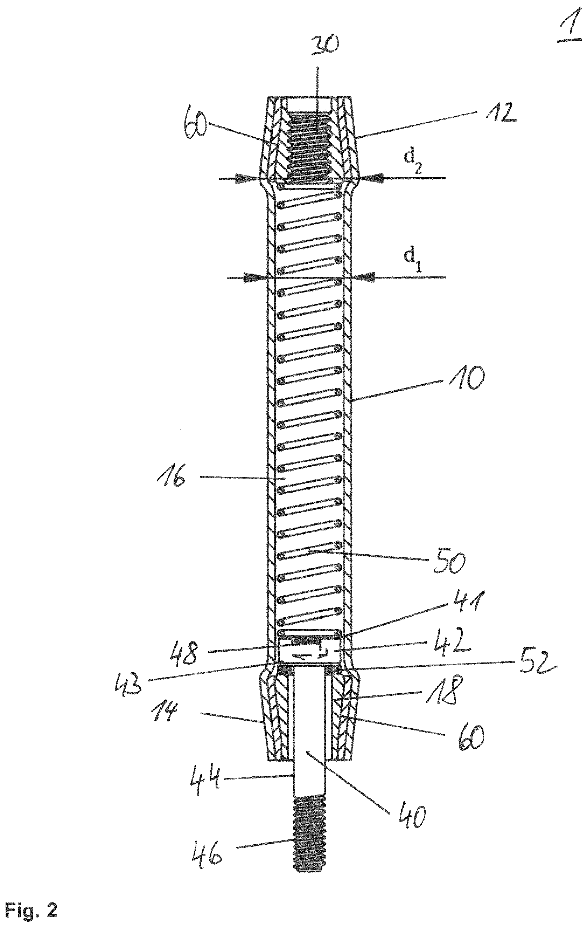

Während Figur 2 einen Längsschnitt durch eine bevorzugte Ausführungsform der erfindungsgemäßen Bolzenmutter 1 zeigt, ist in Figur 1 beispielgebend eine Rohrschelle 3 mit der Bolzenmutter 1 in einer Unterdeckenkonstruktion befestigt. Dazu wurde eine Gewindestange G in einer Decke D verankert, auf die die Bolzenmutter 1 aufgeschraubt ist. Mit dem Verbindungsbolzen der Bolzenmutter 1 ist die ein Rohr R tragende Rohrschelle 3 mit der Bolzenmutter 1 und dadurch mit der Decke D verbunden.

Vorzugsweise besteht das Rohr 10 aus Metall oder Kunststoff.

Weiter bevorzugt besteht das Rohr 10 aus Metall. Das Metall hat eine Bruchdehnung A in einem Bereich von 8 %≤A≤50 %, insbesondere von 15 %≤A≤50 %. Die bevorzugte Bruchdehnung bildet die materialtechnische Grundlage für das Setzen und elastisch-plastische Befestigen des erfindungsgemäß bevorzugten Einsteckeinsatzes 60 im Rohr 10.

Die Bruchdehnung A bestimmt sich gemäß EN ISO 68921: 2019: Metallic materials - Tensile testing - Part 1: Method of test at room temperature.

Gemäß einer bevorzugten Ausgestaltung vorliegender Erfindung besteht das Rohr aus Edelstahl. Edelstahl hat aufgrund seiner Materialeigenschaften den Vorteil, dass es korrosionsbeständig, temperaturbeständig, robuster gegen Umgebungseinflüsse und damit hygienischer im Vergleich zu Stahl ist. Dies gilt insbesondere, wenn es sich um rostfreien Edelstahl handelt, da dessen Oberfläche auch weniger kontaminationsanfällig ist als bspw. Stahl.

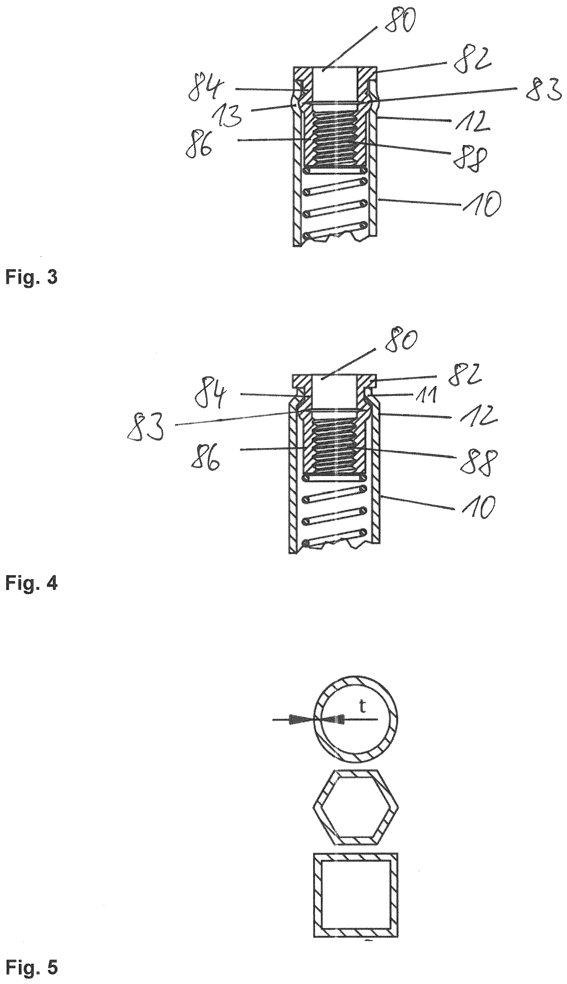

Weiter bevorzugt weist das Rohr eine Wandstärke t (siehe Fig. 5) im Bereich von 0,2 mm≤t≤5 mm, insbesondere 0,3 mm≤t≤2 mm, auf.

Dieser Wandstärkenbereich ist besonders in Kombination mit Edelstahl als Rohrmaterial bevorzugt.

Die bevorzugte Ausführungsform der Bolzenmutter 1 in Figur 2 weist ein Rohr 10 mit einem ersten 12 und einem zweiten offenen Rohrende 14 auf. Die beiden Rohrenden 12, 14 sind über einen freien Durchgangskanal 16 im Inneren des Rohrs 10 miteinander verbunden.

Benachbart zum ersten offenen Rohrende 12 ist im Inneren des Rohrs 10, also an einer radialen Innenseite, ein Mutterngewinde 30 angeordnet.

Gemäß unterschiedlicher bevorzugter Ausführungsformen vorliegender Erfindung wird das Mutterngewinde 30 durch einen Einsteckeinsatz 50 bereitgestellt, wie er unten näher erläutert ist.

Gemäß einer weiteren bevorzugten Ausführungsform (nicht gezeigt) vorliegender Erfindung, ist das Mutterngewinde 30 in die radiale Innenwand des Rohres 10 geschnitten oder gefurcht.

Gemäß einer weiteren bevorzugten Ausführungsform vorliegender Erfindung wurde ein Gewindeeinsatz mit Mutterngewinde 30 (nicht gezeigt) im ersten Rohrende 12 befestigt. Eine derartige Befestigung erfolgt beispielsweise durch Kleben oder Schweißen.

Ebenfalls bevorzugt und unten im Detail beschrieben wird ein Mutterngewinde 30 durch Setzen einer Blindnietmutter im ersten Rohrende 12 bereitgestellt. Ein Setzverfahren für Blindnietmuttern ist im Stand der Technik bekannt.

Das oben genannte Mutterngewinde 30 dient vorzugsweise der Aufnahme einer Gewindestange oder eines Gewindebolzens. Um deren Halt im Mutterngewinde 30 zu unterstützen, weist das Mutterngewinde 30 in einer bevorzugten Ausgestaltung eine Verdrehsicherung auf. Damit wird ein zufälliges Lösen einer eingeschraubten Gewindestange oder eines Gewindebolzens beispielsweise durch Vibrationen erschwert.

Benachbart zum zweiten Rohrende 14 und über das zweite Rohrende 14 hinaus aus dem Rohrinneren ragend ist ein Verbindungsbolzen 40 angeordnet. Der Verbindungsbolzen hat einen Kopf 42 und einen damit verbundenen Schaft 44. Der Schaft 44 ist im Außendurchmesser bevorzugt kleiner ausgebildet als der Kopf 42, sodass der Verbindungsbolzen 40 formschlüssig im Inneren des Rohrs 10 drehbar angeordnet und befestigt werden kann.

Gemäß einer bevorzugten Ausgestaltung vorliegender Erfindung weist der Schaft 44 ein Außengewinde 46 auf.

Gemäß einer anderen bevorzugten Ausführungsform des Verbindungsbolzens 40 ist an dem Schaft 44 ein Bajonettverschluss oder eine Rastkonstruktion oder ein Steilgewinde (nicht gezeigt) vorgesehen, um eine Verbindung zwischen dem Verbindungsbolzen 40 und beispielsweise einer Rohrschelle 3 oder einem anderen Anbauteil herstellen zu können.

Gemäß einer weiteren bevorzugten Ausgestaltung vorliegender Erfindung hat der Kopf 42 an seiner dem Schaft 44 abgewandten Seite ein Antriebsmittel 48, wie beispielsweise einen Schlitz, ein Kreuz oder eine Torxöffnung.

Vorzugsweise ist das Mutterngewinde 30 in seinem freien Innendurchmesser derart dimensioniert, dass man mit einem Werkzeug (nicht gezeigt) durch das erste offene Rohrende 12 und den Durchgangskanal 16 in das Antriebsmittel 48 eingreifen kann, um ein Drehmoment auf den Verbindungsbolzen 40 zu übertragen. Mit diesem Drehmoment lässt sich vorzugsweise das Außengewinde 46 in die Rohrschelle 3 oder ein anderes Aufnahmegewinde einschrauben.

Ebenfalls bevorzugt ist das Mutterngewinde in seinem inneren Umfangsverlauf und Innendurchmesser an eine Form eines einzusteckenden Werkzeugs, wie beispielsweise ein Inbusschlüssel oder Steckschlüssel, angepasst. Diese komplementär zum Werkzeug ausgeformte innere Durchgangsöffnung des Mutterngewindes 30 erlaubt den drehenden Eingriff des Werkzeugs. Damit kann die Bolzenmutter durch das Werkzeug um seine Längsachse gedreht werden, ohne dass durch diese Formgebung die Funktionsweise des Mutterngewindes beeinträchtigt ist.

In dem Durchgangskanal 16 ist eine Feder 50 angeordnet. Die Feder 50 stützt sich vorzugsweise am Kopf 42 des Verbindungsbolzens 40 und benachbart zum ersten Rohrende 12 ab, um den Verbindungsbolzen 40, vorzugsweise ein Gewindebolzen, in Richtung des zweiten Rohrendes 14 federvorzuspannen.

Wie man anhand von Figur 2 erkennen kann, übt die Feder 50 eine in axialer Richtung wirkende Federvorspannung auf den Verbindungsbolzen 40 aus. Dies führt dazu, dass eine Kopfunterseite 43, die dem Schaft 44 zugewandt ist, gegen die Verengung 18 am zweiten Rohrende 14 gedrückt wird. Gemäß der Ausführungsform in Figur 2 bildet die Verengung 18 des Rohrs 10 der Einsteckeinsatz 60 (siehe unten).

Es ist ebenfalls bevorzugt, die Verengung 18 durch einen hohlzylindrischen Buchseneinsatz oder eine Verpressung des Rohrs 10 zur Reduktion des freien Innendurchmessers des Rohrs 10 zu realisieren.

Die in Richtung der Verengung 18 wirkende Federvorspannung erzeugt ein Reibmoment zwischen einer Oberseite 41 des Kopfes 42, die vom Schaft 44 abgewandt ist, und der Feder 50. Weiter bevorzugt wird auch ein Reibmoment zwischen der Kopfunterseite 43 und der Verengung 18 erzeugt.

Dieses oder diese Reibmomente unterstützen, dass der Verbindungsbolzen 40 bei einer Drehung des Rohrs 10 reibschlüssig mitgedreht wird. Dieser positive Effekt unterstützt die Installation des Verbindungsbolzens 40 in einem Mutterngewinde, beispielsweise einer Rohrschelle 3.

Wird die Verengung 18 durch einen Einsteckeinsatz 60 gebildet, entsteht vorzugsweise das zusätzliche Reibmoment zwischen der Kopfunterseite 43 und dem Einsteckeinsatz 60.

Wird die Verengung 18 durch eine Verpressung des Rohrs 10 erzeugt, entsteht vorzugsweise das zusätzliche Reibmoment zwischen dem Verbindungsbolzen 40 und dem Rohr 10 durch einen Reibschluss zwischen der Kopfunterseite 43 und einer diese kontaktierenden inneren Oberfläche des Rohrs 10 (nicht gezeigt).

Um gemäß einer bevorzugten Ausführungsform vorliegender Erfindung das Reibmoment zwischen der Kopfunterseite 43 und einer dieser gegenüberliegenden Oberfläche, beispielsweise der Einsteckeinsatz 60 oder die Verengung 18 in Form der Verpressung 20, zu erhöhen, ist an dieser Stelle ein Ring 52 aus elastischem Material vorgesehen. Der Ring 52, vorzugsweise ein elastischer O-Ring oder ein Ring hohlzylindrischer Gestalt, wirkt aufgrund seiner elastischen Materialeigenschaften einem relativen Verdrehen zwischen der Kopfunterseite 43 und dem Ring 52 und/oder zwischen dem Einsteckeinsatz 60 und dem Ring 52 entgegen. Dies unterstützt ebenfalls ein Mitdrehen des Verbindungsbolzens 40 beim Drehen des Rohrs 10 zur Installationsunterstützung des Werkers.

Wenn bezugnehmend auf die schematische Darstellung in Figur 6 a das Rohr 10 als Verengung 18 eine Verpressung 20 aufweist, verringert die Verpressung 20 den Innendurchmesser des Rohrs 10. Die durch die Verpressung 20 der Kopfunterseite 43 gegenüberliegende Oberfläche des Rohrs 10 zur bevorzugten Erzeugung eines zusätzlichen Reibmoments zwischen dem Verbindungsbolzen 40 und dem Rohr 10 ist für einen elastischen hohlzylindrischen Ring 52 nicht optimal geeignet.

Daher wird in dieser bevorzugten Ausführungsform gemäß einer schematischen Darstellung in Figur 6 b ein kegelstumpfartiger Ring 52' zwischen Kopfunterseite 43 und Verpressung 20 eingesetzt. Während der Schaft 44 den kegelstumpfartigen Ring durchläuft, liegt die Ringfläche des kegelstumpfartigen Rings an der Kopfunterseite 43 an. Eine Mantelfläche des kegelstumpfartigen Rings legt sich vorzugsweise an eine radial innere Oberfläche der Verpressung 20 oder der Verengung 18 an. Auf diese konstruktive Weise erzeugt der kegelstumpfartige Ring ein bevorzugtes Reibmoment zwischen dem Verbindungsbolzen 40 und dem Rohr 10.

Gemäß einer weiteren bevorzugten Ausführungsform vorliegender Erfindung gemäß Figur 6 ist zwischen dem Verbindungsbolzen 40 und der Verpressung 20 eine zweite Feder 55 angeordnet. Die zweite Feder 55 stützt sich bevorzugt an der Kopfunterseite 43 und einer radialen Innenseite 22 der Verpressung 20 ab. Da die zweite Feder 55 zwischen der Kopfunterseite 43 und der Innenseite 22 der Verpressung 20 federvorgespannt ist, entsteht ein zusätzliches Reibmoment zwischen dem Verbindungsbolzen 40 und der Innenseite 22 des Rohrs 10. Dieses unterstützt ebenfalls die Installation oder Deinstallation des Verbindungsbolzens 40 allein durch Drehen des Rohrs 10 durch den Werker.

Der Verbindungsbolzen 40 ist drehbar im Rohr 10 angeordnet. Dies hat den bevorzugten Vorteil, dass an dem Schaft 44, vorzugsweise auf dem Gewinde 46, zunächst ein Anbauteil, bspw. die Rohrschelle 3, befestigt werden kann.

Da das Anbauteil bevorzugt an oder auf dem Schaft 44 befestigt ist, bspw. mit Hilfe einer Kontermutter auf dem Gewinde 46, ist der Schaft 44 mit Kopf 42 des Verbindungsbolzens 40 weiterhin im Inneren des Rohrs 10 frei drehbar angeordnet. Somit kann die Verbindung mit dem Mutterngewinde 30 hergestellt oder verändert oder gelöst werden, ohne die Verbindung zwischen Verbindungsbolzen 40 und Anbauteil zu beeinträchtigen.

Sollte zur Installation oder Deinstallation der Bolzenmutter 1 ein hohes Drehmoment erforderlich sein, wird dieses bevorzugt mit einem Werkzeug auf das Rohr 10 übertragen. Zu diesem Zweck weist das Rohr 10 an seiner Außenseite zumindest in Teilbereichen seiner Länge die Form eines Vierkants oder eines Sechskants auf, wie es beispielgebend Figur 5 zeigt.

Der Mehrkant wird bevorzugt unter Nutzung eines Werkzeugs, wie einem Maulschlüssel oder dergleichen, auch dafür verwendet, eine Abstandseinstellung zwischen den an den gegenüberliegenden Enden der Bolzenmutter 1 befestigten Gegenstände, wie beispielsweise eine Rohrschelle 3 und eine Deckenkonstruktion, vorzunehmen.

Am ersten offenen Rohrende 12 ist an einer radialen Innenseite das Mutterngewinde 30 vorgesehen. Gemäß einer ersten bevorzugten Ausführungsform vorliegender Erfindung wird das Mutterngewinde 30 durch einen unten näher erläuterten Einsteckeinsatz 60 bereitgestellt (siehe Figur 2).

Gemäß einer weiteren bevorzugten Ausführungsform ist eine Blindnietmutter 80 in dem ersten Rohrende 12 befestigt. Die Blindnietmutter 80 weist in bekannter Weise einen umlaufenden radial auswärts ragenden Kragen 82, einen gewindelosen Schaft 84 und einen Schaftbereich 86 mit Innengewinde 88 auf.

Um die Blindnietmutter 80 im ersten Rohrende 12 zu befestigen, ist vorzugsweise die Blindnietmutter 80 in einem Außendurchmesser an den Innendurchmesser des Rohrs 10 angepasst.

Geringe Toleranzen zwischen dem Außendurchmesser der Blindnietmutter 80 und dem Innendurchmesser des Rohrs 10 gewährleisten ein annähernd spielfreies Einstecken der Blindnietmutter 80 in das erste Rohrende 12.

Das Setzen der Blindnietmutter 80 erzeugt in bekannter Weise eine Ringwulst 83. Zur Aufnahme der Ringwulst 83 ist vorzugsweise in einer ersten bevorzugten Ausgestaltung des Rohrs 10 eine radial innere konkave Ringwölbung 13 vorgesehen. Beim Setzen der Blindnietmutter 80 im ersten Rohrende 12 bildet die radial auswärts drängende Ringwulst 83 bevorzugt die Ringwölbung 13 aus. Das Rohr 10 benachbart zur Ringwölbung 13, also zwischen dem Kragen 82 und der Ringwölbung 13 sowie angrenzend an die Ringwölbung 13 und radial neben dem Gewindeschaft 86, ist weiterhin direkt benachbart, vorzugsweise anliegend, zur radialen Außenseite des Schafts 84, 86 angeordnet. Dadurch erzeugt die Ringwulst 83 bevorzugt in der Ringwölbung 13 eine radiale reibschlüssige Befestigung sowie eine axiale formschlüssige Befestigung zwischen der Blindnietmutter 80 und dem Rohr 10.

Sollte sich das Rohr 10 aufgrund seiner Wandstärke t nicht durch die sich ausbildende Ringwulst 83 aufweiten lassen, läuft das erste Rohrende 12 in abgewandter Richtung vom zweiten Rohrende 14 gemäß einer weiteren bevorzugten Ausgestaltung vorliegender Erfindung, die in Figur 4 gezeigt ist, in einer Verengung 11 aus. Das erste Rohrende 12 ist vorzugsweise in seinem Innendurchmesser an einen radialen Außendurchmesser der Ringwulst 83 angepasst. Während des Setzens der Blindnietmutter 80 wird die Ringwulst 83 so weit aufgeweitet, dass ihr Außendurchmesser annähernd gleich dem Innendurchmesser des Rohrs 10 am ersten Rohrende 12 ist. Durch die Ausbildung der Ringwulst 83 während des Setzens der Blindnietmutter 80 im ersten Rohrende 12 wird bevorzugt die Verengung 11 formschlüssig und kraftschlüssig zwischen der Ringwulst 83 und einer Unterseite des Kragens 82 der Blindnietmutter 80 befestigt. Es versteht sich, dass die Verengung 11 in ihrem Innendurchmesser gleich oder unwesentlich größer als der Außendurchmesser des Schafts 84, 86 der Blindnietmutter 80 ausgebildet ist, damit die Blindnietmutter 80 vor dem Setzen durch die Verengung 11 in den Durchgangskanal 16 des Rohrs 10 gesteckt werden kann.

Um das erste Rohrende 12 mit dem Mutterngewinde 30 und das zweite Rohrende 14 mit der Verengung 18 bereitzustellen, wird bevorzugt der Einsteckeinsatz 60 unterschiedlicher Konfiguration eingesetzt. Unterschiedliche beispielhafte Ausgestaltungen des Einsteckeinsatzes 60 zeigen die Figuren 7 bis 9.

Der Einsteckeinsatz 60 unterteilt sich in eine hohlzylindrische radiale Ausgleichshülse 62 und eine konische Gewindehülse 64 (siehe Figuren 7 und 8) oder eine konische Hülse 66 (siehe Figur 9) ohne Mutterngewinde 30. Die konische Gewindehülse 64 und die konische Hülse 66 laufen an einem verjüngten axialen Ende in einem hohlzylindrischen gewindelosen Verbindungsschaft 68 aus.

Gemäß einer ersten Ausgestaltung ist der Verbindungsschaft 68 integral mit der konischen Gewindehülse 64 oder der konischen Hülse 66 verbunden. Figur 7a zeigt die Ausführungsform mit der konischen Gewindehülse 64, während Figur 7b die Ausführungsform mit konischer Hülse 66 zeigt. Zudem ist der Verbindungsschaft 68 über eine Sollbruchstelle S fest mit der Ausgleichshülse 62 verbunden.

Die Verbindung zwischen der Ausgleichshülse 62 und der konischen Gewindehülse 64 oder der konischen Hülse 66 eröffnet die bevorzugte Möglichkeit, den einteiligen Einsteckeinsatz 60 als Drehteil herzustellen. Drehteil bedeutet, dass der Einsteckeinsatz 60 durch das spanende Fertigungsverfahren Drehen hergestellt und bearbeitet werden kann.

Wie anhand des weiter unten erläuterten Setzverfahrens des Einsteckeinsatzes 60 deutlich wird, wird die konische Gewindehülse 64 oder die konische Hülse 66 jeweils auf die Ausgleichshülse 62 versetzt, um den Einsteckeinsatz 60 im Rohr 10 zu befestigen. Bei diesem Setzvorgang weitet die konische Gewindehülse 64 oder die konische Hülse 66 das Rohr 10 radial plastisch auf. Daraus folgt eine formschlüssige Verbindung zwischen Rohr 10 und Einsteckeinsatz 60 in axialer Richtung des Rohrs 10. Eine verbleibende Restkomponente einer elastischen Verformung des Rohrs 10 durch das Setzen des Einsteckeinsatzes 60 sorgt bevorzugt für einen reibschlüssigen Halt des Einsteckeinsatzes 60 im Rohr 10. Während des radialen Aufweitens muss die konische Hülse 66 und die konische Gewindehülse 64 bevorzugt formstabil bleiben. Die bevorzugte Formstabilität garantiert eine unveränderte Gewindegeometrie sowie eine unveränderte Buchsengeometrie nach Abschluss des Setzvorgangs des Einsteckeinsatzes 60. Dies gilt für die einteiligen wie die zweiteiligen Einsteckeinsätze 60.

Für die Gewährleistung der Formstabilität ist ein Durchmesser-Verhältnis eines Innendurchmessers d_{N} zum minimalen Außendurchmesser d_{Amin} der konischen Gewindehülse 64 und der konischen Hülse 66 mindestens 4/5, vorzugsweise 8/11. Bei der konischen Gewindehülse 64 entspricht der Innendurchmesser d_{N} dem Nenndurchmesser des Gewindes.

Die in den Figuren 8 und 9 dargestellten Einsteckeinsätze 60 weisen jeweils die Ausgleichshülse 62 und die konische Gewindehülse 64 oder die konische Hülse 66 auf, die nicht fest miteinander verbunden sind. Vielmehr sind die Ausgleichshülse 62 und die konische Gewindehülse 64 oder die konische Hülse 66 über den Verbindungsschaft 68 ineinander und damit zusammengesteckt, sodass sie als Einzelteile voneinander lösbar aber fest miteinander verbunden sind. Dies eröffnet den Vorteil, dass der zweiteilige Einsteckeinsatz 60 der Figuren 8 und 9 in gleicher Weise verarbeitet werden kann wie der einteilige Einsteckeinsatz 60 der Figur 7.

Die zweiteilige Ausführung des Einsteckeinsatzes 60 hat den Vorteil, dass die Ausgleichshülse 62 und die konische Gewindehülse 64 oder die konische Hülse 66 jeweils mit einem Kaltschlagverfahren herstellbar sind.

Der Einsteckeinsatz 60 ist vorgesehen, um in einem Rohr 10 befestigt zu werden, um ein Mutterngewinde 30 oder eine Buchse bereitzustellen. Bei diesem Setzverfahren, welches unten näher erläutert ist, gleicht die Ausgleichshülse 62 einen Zwischenraum zwischen einer radialen Innenseite des Rohrs 10 und einer radialen Außenseite der konischen Gewindehülse 64 oder der konischen Hülse 66 aus.

In einem ersten Schritt S1 wird der Einsteckeinsatz 60 mit der konischen Gewindehülse 64 voraus in das Rohr 10 gesteckt. Damit ist bevorzugt die Ausgleichshülse 62 angrenzend an das freie Ende des ersten Rohrendes 12 angeordnet.

Nachfolgend wird eine Setz- oder Zugspindel 90 in das Mutterngewinde 30 der konischen Gewindehülse 64 eingeschraubte (Schritt S2).

Danach werden ein Gegenlager 92 und das Rohr 10 relativ zueinander versetzt, sodass sich die hohlzylindrische Ausgleichshülse 62 und vorzugsweise das Rohr 10 am Gegenlager 92 abstützen (Schritt S3, Figur 11).

Sobald sich die hohlzylindrische Ausgleichshülse 62 am Gegenlager 92 abstützt, werden die Zugspindel 90 und das Gegenlager 92 derart relativ zueinander versetzt, dass die konische Gewindehülse 64 in die Ausgleichshülse 62 gezogen wird (siehe Figur 11 und 12).

In einer denkbaren Ausgestaltung wird die konische Gewindehülse 64 so weit in die hohlzylindrische Ausgleichshülse 62 gezogen, bis beide Hülsen 64, 62 zueinander fluchten oder gemeinsam am Gegenlager 92 anliegen.

Gemäß einer anderen Vorgehensweise wird die konische Gewindehülse 64 nur teilweise in die hohlzylindrische Ausgleichshülse 62 gezogen, sodass ein ausreichender Halt des Einsteckeinsatzes 60 erreicht ist.

Während die konische Gewindehülse 64 axial in die Ausgleichshülse 62 versetzt wird, wird das Rohr 10 radial aufgeweitet. Damit ergibt sich eine formschlüssige und eine kraftschlüssige bzw. reibschlüssige Befestigung des Einsteckeinsatzes 60 im Rohr 10.

Gerade die formschlüssige Befestigung des Einsteckeinsatzes 60 im Rohr 10 zeigt sich daran, dass der Durchmesser des Rohrs 10 um 1 % bis 15 % im Bereich der Einformung des Einsteckeinsatzes 60 durch die konische Gewindehülse 64 aufgeweitet wird. Der formschlüssige Verbund zwischen Rohr 10 und Einsteckeinsatz 60 wird durch eine Wulst benachbart zur zweiten Öffnung des Rohrs 10 deutlich.

Während des axialen Versatzes der konischen Gewindehülse 64 in die Ausgleichshülse 62 stellt der hohlzylindrische Verbindungsschaft 68 bevorzugt ein Einlaufen der konischen Gewindehülse 64 in die Ausgleichshülse 62 sicher. Das gilt gleichermaßen für den einteiligen (siehe Figur 7) wie den zweiteiligen Einsteckeinsatz 60 (siehe Figuren 8 und 9). Denn selbst wenn bei der Nutzung der Sollbruchstelle S ein störender Grat zwischen der Ausgleichshülse 62 und der konischen Gewindehülse 64 entstehen sollte, stellt weiterhin der hohlzylindrische Verbindungsschaft 68 das störungsfreie Einlaufen der konischen Gewindehülse 64 in die Ausgleichshülse 62 sicher.

Nachdem der Einsteckeinsatz 60 gesetzt worden ist, wird im Schritt S6 die Zugspindel 90 aus dem Mutterngewinde 30 ausgespindelt.

Um den Einsteckeinsatz 60 mit konischer Hülse 66 setzen zu können, wird der Gewindebolzen 40 gemeinsam mit dem Einsteckeinsatz 60 Kopf voraus in das Rohr 10 gesteckt. In gleicher Weise wie bei dem zuvor beschriebenen Setzverfahren schließt beispielgebend die Ausgleichshülse 62 gemeinsam mit dem Rohr 10 ab. Die Kopfunterseite 43 liegt an der konischen Hülse 66 an (Schritt S1').

Danach wird das Gewinde 46 des Verbindungsbolzens 40 in eine Zugmutter o. ä. (nicht gezeigt) eingeschraubt und das Gegenlager 92 in Anlage mit der Ausgleichshülse 62 oder vorzugsweise in Anlage mit der Ausgleichshülse 62 und dem Rohr 10 gebracht (Schritt S3'). Danach werden die Zugmutter und das Gegenlager 92 relativ zueinander versetzt, sodass der Kopf 42 des Verbindungsbolzens 40 die konische Hülse 66 in die Ausgleichshülse 62 schiebt (Schritt S4', Figur 14).

Der Setzvorgang ist gemäß einer Ausgestaltung beendet, wenn sich die Ausgleichshülse 62 und die konische Hülse 66 zueinander fluchten oder gemeinsam am Gegenlager 92 abstützen.

Gemäß einer weiteren beispielhaften Ausgestaltung vorliegender Erfindung wird die konische Hülse 66 nur teilweise in die hohlzylindrische Ausgleichshülse 62 gezogen, sodass ein ausreichender Halt des Einsteckeinsatzes 60 erreicht ist. Danach ist der Setzvorgang beendet.

Danach wird der Verbindungsbolzen 40 aus der Zugmutter ausgeschraubt.

Wie man anhand des Setzverlaufs des Einsteckeinsatzes 60 in den Figuren 10 bis 12 und 13 bis 15 erkennen kann, wird das Rohr 10 radial aufgeweitet, um die ineinander geschobenen konischen Gewindehülsen 64 bzw. die konische Hülse 66 und die Ausgleichshülse 62 form- und reibschlüssig im Rohr 10 zu verankern. Es ergeben sich die gleichen Verformungseigenschaften, wie sie oben in Bezug auf den Einsteckeinsatz 60 mit Innengewinde beschrieben worden sind.

Da das Rohr 10 basierend auf seinem elastisch plastisch verformbaren Material, vorzugsweise Edelstahl, dem Innendruck der konischen Gewindehülse 64 bzw. der konischen Hülse 66 nachgibt, bleibt bevorzugt die Geometrie des Mutterngewindes 30 trotz des Setzvorgangs erhalten.

Zur Unterstützung der Befestigung des Einsteckeinsatzes 60 im Rohr 10 weisen die konische Gewindehülse 64 und die konische Hülse 66 in einer Ausgestaltung ein Kegelverhältnis K im Bereich von 1:12≤K≤1:4, vorzugsweise 1:10≤K≤1:6, auf. Das Kegelverhältnis K charakterisiert die Kegelform technisch. Dazu wird die Differenz des maximalen und des minimalen Außendurchmessers der konischen Gewindehülse 64 oder der konischen Hülse 66 durch den axialen Abstand der beiden Außendurchmesser dividiert.

### 6. Bezugszeichenliste

- 1: Bolzenmutter
- 3: Rohrschelle
- 10: Rohr
- 11: Verengung am ersten Rohrende
- 12: erstes offenes Rohrende
- 13: Ringwölbung
- 14: zweites offenes Rohr
- 16: Durchgangskanal
- 18: Verengung
- 20: Verpressung
- 30: Mutterngewinde
- 40: Verbindungsbolzen
- 41: Kopfoberseite
- 42: Kopf
- 43: Kopfunterseite
- 44: Schaft
- 46: Außengewinde
- 48: Antriebsmittel
- 50: Feder
- 52: Ring aus elastischem Material
- 55: Feder
- 60: Einsteckeinsatz
- 62: Ausgleichshülse
- 64: konische Gewindehülse
- 66: konische Hülse ohne Mutterngewinde
- 68: hohlzylindrischer Verbindungsschaft
- 80: Blindnietmutter
- 82: Kragen
- 83: Ringwulst
- 84: gewindeloser Schaft
- 86: Schaftbereich
- 88: Innengewinde
- 90: Setz-/Zugspindel
- 92: Gegenlager
- G: Gewindestange
- D: Decke
- R: Rohr
- S: Sollbruchstelle

## Patentansprüche

1. Eine Bolzenmutter (1) zur Befestigung einer Unterdeckenkonstruktion, die die folgenden Merkmale aufweist:
a. ein Rohr (10) mit einem ersten offenen Rohrende (12) und einem zweiten offenen Rohrende (14) sowie einem die Rohrenden (12, 14) verbindenden Durchgangskanal (16),
b. ein Mutterngewinde (30), das an einer radialen Innenseite benachbart zum ersten Rohrende (12) angeordnet ist,
c. einen Verbindungsbolzen (40), vorzugsweise ein Gewindebolzen, mit einem Schaft (44) und einem Kopf (42), der angrenzend an das zweite Rohrende (14) formschlüssig und drehbar in dem Durchgangskanal (16) gehalten ist, und
d. ein Reibungsmittel, welches in angepasster Zusammenwirkung mit einer Relativdrehung des Verbindungsbolzens ein Reibmoment erzeugt, welches der Drehung des Verbindungsbolzens entgegenwirkt.

2. Die Bolzenmutter (1) gemäß Patentanspruch 1, in der das Mutterngewinde (30) durch eine am ersten Rohrende (12) befestigte Blindnietmutter (80) oder einen Einsteckeinsatz (60) mit Mutterngewinde (30) bereitgestellt ist.

3. Die Bolzenmutter (1) gemäß Patentanspruch 1 oder 2, in der das Rohr (10) benachbart zu dem zweiten Rohrende (14) eine Verengung (18) des Durchgangskanals (16) aufweist, sodass ein Innendurchmesser der Verengung (18) kleiner ist als ein Außendurchmesser des Kopfes (42), um den Verbindungsbolzen (40) formschlüssig im Durchgangskanal (16) zu halten.

4. Die Bolzenmutter (1) gemäß Patentanspruch 3, in der die Verengung (18) durch einen Buchseneinsatz oder einen Einsteckeinsatz (60) ohne Mutterngewinde (30) oder durch eine Verpressung (20) des Rohrs (10) bereitgestellt ist.

5. Die Bolzenmutter (1) gemäß Patentanspruch 2 oder 3 in Kombination mit 2 oder 4, in der der Einsteckeinsatz (60) kraft- und formschlüssig mit dem Rohr (10) verbunden ist.

6. Die Bolzenmutter (1) gemäß Patentanspruch 4, in der zwischen dem Kopf (42) des Verbindungsbolzens (40) und dem zweiten Rohrende (14) ein Ring (52) aus elastischem Material als ein erstes Reibungsmittel angeordnet ist, um bei Relativdrehung eine Reibung zwischen Kopf (42) und Buchseneinsatz oder Einsteckeinsatz (60) oder Verpressung zu erhöhen.

7. Die Bolzenmutter (1) gemäß mindestens einem der vorhergehenden Patentansprüche, in der ein zweites Reibungsmittel durch eine erste Feder (50) vorgesehen ist, die im Durchgangskanal (16) zwischen dem Kopf (42) des Verbindungsbolzens (40) und dem Mutterngewinde (30) benachbart zum ersten Rohrende (12) angeordnet ist, um den Verbindungsbolzen (40) in Richtung des zweiten Rohrendes (14) axial vorzuspannen.

8. Die Bolzenmutter (1) gemäß mindestens einem der vorhergehenden Patentansprüche 1 bis 5, in der zwischen dem Kopf (42) des Verbindungsbolzens (40) und dem zweiten Rohrende (14) eine zweite Feder (55) angeordnet ist, um eine Reibung zwischen Kopf (42) und dem Rohr (10) zu erhöhen.

9. Die Bolzenmutter (1) gemäß mindestens einem der vorhergehenden Patentansprüche, in der das Mutterngewinde (30) und ein Gewinde eines Gewindebolzens (40) als Verbindungsbolzen einen gleichen Drehsinn aufweisen.

10. Ein Herstellungsverfahren einer Bolzenmutter (1), insbesondere einer Bolzenmutter (1) gemäß einem der vorhergehenden Patentansprüche, das die folgenden Schritte aufweist:
a. Bereitstellen (H1) eines zylindrischen Rohrs (10) mit einem ersten (12) und einem zweiten offenen Rohrende (14) und einem die Rohrenden (12, 14) verbindenden Durchgangskanal (16),
b. Verengen (H2) des zweiten Rohrendes (14) durch Verpressen des zweiten Rohrendes (14) oder Einsetzen eines Einsteckeinsatzes (60) ohne Mutterngewinde (30) oder eines Buchseneinsatzes,
c. Einführen (H3) eines Verbindungsbolzens (40) mit einem Kopf (42) und einem Schaft (44) derart in den Durchgangskanal (16), dass der Schaft (44) am zweiten Rohrende aus dem Durchgangskanal (16) herausragt, und
d. Anordnen eines Reibungsmittels im Durchgangskanal, welches in angepasster Zusammenwirkung mit einer Relativdrehung des Verbindungsbolzens in Bezug auf das Rohr (10) ein Reibmoment erzeugt, welches der Drehung des Verbindungsbolzens entgegenwirkt und
e. Einpressen (H5) eines Einsteckeinsatzes (60) mit Mutterngewinde (30) in das erste Rohrende (12).

11. Das Herstellungsverfahren einer Bolzenmutter (1) gemäß Patentanspruch 10, mit dem weiteren Schritt: Anordnen (H4) einer ersten Feder (50) im Durchgangskanal (16) zum axialen Vorspannen des Verbindungsbolzens (40).

12. Das Herstellungsverfahren gemäß Patentanspruch 10 oder 11, welches des Weiteren aufweist: Anordnen eines Rings (52) aus elastischem Material als ein Reibungsmittel zwischen dem Kopf (42) des Verbindungsbolzens (40) und dem zweiten Rohrende (14).

## Claims

1. A bolt nut (1) for fastening a suspended ceiling construction, having the following features:
a. a pipe (10) with a first open pipe end (12) and a second open pipe end (14) as well as a passage channel (16) connecting the pipe ends (12, 14),
b. a nut thread (30) arranged at a radial inside adjacent to the first pipe end (12),
c. a connecting bolt (40), preferably a thread bolt, with a shaft (44) and a head (42) which, adjacent to the second pipe end (14), is retained in the passage channel (16) in a form-fit manner and rotatable, and
d. a friction means, which generates a friction torque in an adapted interaction with a relative rotation of the connecting bolt, which counteracts the rotation of the connecting bolt.

2. The bolt nut (1) according to claim 1, in which the nut thread (30) is provided by a blind rivet nut (80) which is fastened at the first pipe end (12) or by a plug-in insert (60) with nut thread (30).

3. The bolt nut (1) according to claim 1 or 2, in which adjacent to the second pipe end (14), the pipe (10) comprises a narrowing (18) of the passage channel (16), so that an inner diameter of the narrowing (18) is smaller than an outer diameter of the head (42), in order to retain the connecting bolt (40) in a form-fit manner in the passage channel (16).

4. The bolt nut (1) according to claim 3, in which the narrowing (18) is provided by a bushing insert or a plug-in insert (60) without nut thread (30) or by a pressing (20) of the pipe (10).

5. The bolt nut (1) according to claim 2 or 3 in combination with 2 or 4, in which the plug-in insert is connected with the pipe (10) in a force-fit and form-fit manner.

6. The bolt nut (1) according to claim 4, in which between the head (42) of the connecting bolt (40) and the second pipe end (14), a ring (52) out of elastic material as a first friction means is arranged, so as to increase a friction between head (42) and bushing insert or plug-in insert (60) or pressing in case of a relative rotation.

7. The bolt nut (1) according to at least one of the preceding claims, in which a second friction means is provided by a first spring (50), which is arranged in the passage channel (16) between the head (42) of the connecting bolt (40) and the nut thread (30) adjacent to the first pipe end (12), so as to preload the connecting bolt (40) axially in the direction of the second pipe end (14).

8. The bolt nut (1) according to at least one of the preceding claims 1 to 5, in which between the head (42) of the connecting bolt (40) and the second pipe end (14), a second spring (55) is arranged so as to increase a friction between head (42) and the pipe (10).

9. The bolt nut (1) according to at least one of the preceding claims, in which the nut thread (30) and a thread of a thread bolt (40) as connecting bolt have the same direction of rotation.

10. A manufacturing method of a bolt nut (1), in particular a bolt nut (1) according to one of the preceding claims, comprising the following steps:
a. providing (H1) a cylindrical pipe (10) with a first (12) and a second open pipe end (14) and a passage channel (16) connecting the pipe ends (12, 14),
b. narrowing (H2) the second pipe end (14) by grouting the second pipe end (14) or inserting a plug-in insert (60) without nut thread (30) or a bushing insert,
c. inserting (H3) a connecting bolt (40) with a head (42) and a shaft (44) into the passage channel (16) in a way that at the second pipe end, the shaft (44) projects out of the passage channel (16), and
d. arranging a friction means in the passage channel, which in adapted interaction with a relative rotation of the connecting bolt with respect to the pipe (10) generates a friction torque, counteracting the rotation of the connecting bolt and
e. impressing (H5) a plug-in insert (60) with nut thread (30) into the first pipe end (12).

11. The manufacturing method of a bolt nut (1) according to claim 10, with the further step: arranging (H4) a first spring (50) in the passage channel (16) for axially preloading the connecting bolt (40).

12. The manufacturing method according to claim 10 or 11, further comprising: arranging a ring (52) made from an elastic material as a friction means between the head (42) of the connecting bolt (40) and the second pipe end (14).

## Revendications

1. Écrou de boulon (1) destiné à la fixation d'une structure de faux-plafond, présentant les caractéristiques suivantes :
a. un tuyau (10) avec une première extrémité de tuyau (12) ouverte et une deuxième extrémité de tuyau (14) ouverte ainsi qu'un canal de passage (16) reliant les extrémités de tuyau (12, 14),
b. un filetage d'écrou (30) disposé sur un côté intérieur radial à côté de la première extrémité de tuyau (12),
c. un boulon d'assemblage (40), de préférence un boulon fileté, doté d'une tige (44) et d'une tête (42), lequel est maintenu par complémentarité de forme et de façon rotative dans le canal de passage (16) de façon adjacente à la deuxième extrémité de tuyau (14), et
d. un moyen de friction produisant, en coopération adaptée avec une rotation relative du boulon d'assemblage, un couple de friction agissant contre la rotation du boulon d'assemblage.

2. Écrou de boulon (1) selon la revendication 1, dans lequel le filetage d'écrou (30) est fourni par un écrou borgne à riveter (80) fixé à la première extrémité de tuyau (12) ou par un insert enfichable (60) avec filetage d'écrou (30).

3. Écrou de boulon (1) selon la revendication 1 ou 2, dans lequel le tuyau (10) présente un rétrécissement (18) du canal de passage (16) à côté de la deuxième extrémité de tuyau (14), de sorte qu'un diamètre intérieur du rétrécissement (18) est inférieur à un diamètre extérieur de la tête (42), afin de maintenir le boulon d'assemblage (40) par complémentarité de forme dans le canal de passage (16).

4. Écrou de boulon (1) selon la revendication 3, dans lequel le rétrécissement (18) est fourni par un insert de douille ou un insert enfichable (60) sans filetage d'écrou (30) ou par une compression (20) du tuyau (10).

5. Écrou de boulon (1) selon la revendication 2 ou 3 en combinaison avec 2 ou 4, dans lequel l'insert enfichable (60) est relié par adhérence ou complémentarité de forme au tuyau (10).

6. Écrou de boulon (1) selon la revendication 4, dans lequel une bague (52) en matière élastique est disposée en tant que premier moyen de friction entre la tête (42) du boulon d'assemblage (40) et la deuxième extrémité de tuyau (14), afin d'augmenter une friction entre la tête (42) et l'insert de douille ou l'insert enfichable (60) ou la compression lors d'une rotation relative.

7. Écrou de boulon (1) selon l'une au moins des revendications précédentes, dans lequel il est prévu un deuxième moyen de friction par un premier ressort (50), lequel est disposé dans le canal de passage (16) entre la tête (42) du boulon d'assemblage (40) et le filetage d'écrou (30) à côté de la première extrémité de tuyau (12), afin de précontraindre axialement le boulon d'assemblage (40) en direction de la deuxième extrémité de tuyau (14).

8. Écrou de boulon (1) selon l'une au moins des revendications précédentes 1 à 5, dans lequel un deuxième ressort (55) est disposé entre la tête (42) du boulon d'assemblage (40) et la deuxième extrémité de tuyau (14), afin d'augmenter une friction entre la tête (42) et le tuyau (10).

9. Écrou de boulon (1) selon l'une au moins des revendications précédentes, dans lequel le filetage d'écrou (30) et un filetage d'un boulon fileté (40) en tant que boulon d'assemblage présentent un même sens de rotation.

10. Procédé de fabrication d'un écrou de boulon (1), en particulier d'un écrou de boulon (1) selon l'une des revendications précédentes, présentant les étapes suivantes :
a. mise à disposition (H1) d'un tuyau cylindrique (10) doté d'une première (12) et d'une deuxième extrémité de tuyau (14) ouverte et d'un canal de passage (16) reliant les extrémités de tuyau (12, 14),
b. rétrécissement (H2) de la deuxième extrémité de tuyau (14) par compression de la deuxième extrémité de tuyau (14) ou par insertion d'un insert enfichable (60) sans filetage d'écrou (30) ou d'un insert de douille,
c. introduction (H3) d'un boulon d'assemblage (40) doté d'une tête (42) et d'une tige (44) de telle façon dans le canal de passage (16), que la tige (44) fait saillie hors du canal de passage (16) au niveau de la deuxième extrémité de tuyau, et
d. disposition d'un moyen de friction dans le canal de passage, lequel produit, en coopération adaptée avec une rotation relative du boulon d'assemblage par rapport au tuyau (10), un couple de friction agissant contre la rotation du boulon d'assemblage et
e. pressage (H5) d'un insert enfichable (60) avec filetage d'écrou (30) dans la première extrémité de tuyau (12).

11. Procédé de fabrication d'un écrou de boulon (1) selon la revendication 10, comprenant l'étape supplémentaire suivante : disposition (H4) d'un premier ressort (50) dans le canal de passage (16) pour la précontrainte axiale du boulon d'assemblage (40).

12. Procédé de fabrication selon la revendication 10 ou 11, présentant en outre : la disposition d'une bague (52) en matière élastique en tant que moyen de friction entre la tête (42) du boulon d'assemblage (40) et la deuxième extrémité de tuyau (14).
